# EUROPÄISCHE PATENTANMELDUNG

(11) **EP 1 264 656 A1**
(43) Veröffentlichungstag der Anmeldung: **11.12.2002**
(21) Anmeldenummer: 02012353.5
(22) Anmeldetag: 05.06.2002
(51) Int. Cl.: B23K 35/02, B23K 20/12

(54) **Vefahren zur Herstellung einer Reibschweissverbindung und Schweissbolzen dafür**

(30) Priorität: 06.06.2001 DE 20109359 U
(71) Anmelder: HILBIG SCHWEISSTECHNIK GmbH, D-21079 Hamburg (DE); IWS Institut für Werkstoffkunde und Schweisstechnik Service GmbH, 20099 Hamburg (DE)
(72) Erfinder: Seyen, Malte,Dipl.-Ing., D-21079 Hamburg (DE); Junge, Heiko,Dipl.-Ing., D-22763 Hamburg (DE)
(74) Vertreter: Patentanwälte Hauck, Graalfs, Wehnert, Döring, Siemons, Schildberg

(57) **Zusammenfassung**

Verfahren zur Herstellung einer Reibschweißverbindung eines Schweißbolzens mit einem Werkstück aus Leichtmetall, insbesondere Aluminium, gekennzeichnet durch folgende Schritte:
- ein Bolzen aus Leichtmetall, insbesondere Aluminium, wird mit Hilfe eines Antriebswerkzeugs auf eine Drehzahl von mehr als 12000 U/min. beschleunigt und gleichzeitig gegen das Werkstück angepresst
- mit Hilfe einer scharfe Kanten oder dergleichen aufweisenden Geometrie der Stirnfläche des Bolzenkopfes wird die Oxidschicht auf dem Werkstück mechanisch zerstört bzw. aufgerissen
- nach Erreichen der gewünschten Drehzahl wird auf den Bolzen ein impulsförmiger Stoß aufgebracht und
- zugleich wird mit dem impulsförmigen Stoß oder unmittelbar danach das Antriebswerkzeug abgeschaltet.

## Beschreibung

Die Erfindung bezieht sich auf ein Verfahren zur Herstellung einer Reibschweißverbindung eines Bolzens mit einem Werkstück aus Leichtmetall, insbesondere Aluminium nach Patentanspruch 1.

Insbesondere im Schiff- und Karosseriebau ist bekannt, Befestigungsbolzen zu verwenden, um Bauteile und Komponenten anzubringen. Hierfür werden vorwiegend Schweißbolzen verwendet, die in bekannter Weise, beispielsweise durch Bolzenschweißtechnik, an einer Konstruktion befestigt werden. Derartige Bolzen weisen ein Außen- oder ein Innengewinde zur Anbringung von Haltebauteilen auf. Für das Anbringen derartiger Bolzen stehen verschiedene Schweißtechniken zur Verfügung, etwa das Bolzenschweißen mit Hubzündung/Kurzzeitbolzenschweißen, das Kondensatorentladungsschweißen, das Mittelfrequenzschweißen und das Reibbolzenschweißen.

In vielen Bereichen der Technik haben sich aus gewichtsersparenden Gründen Aluminiumlegierungen als Werkstoffe durchgesetzt, beispielsweise bei Leichtbaukarossen für Automobile, aber auch im Schiffbau, beispielsweise bei Schnellfähren und Yachten. Die Festigkeit von Aluminiumlegierungen liegt jedoch erheblich unter der des Stahls. Die mangelnde Festigkeit ist problematisch, wenn lösbare Verbindungen von Bauteilen miteinander erwünscht sind, beispielsweise die Anbringung von Türen an Automobilkarossen oder beim Bau von Schnellfähren.

Wegen der stark unterschiedlichen Schmelzpunkte von Leichtbauwerkstoffen einerseits und Stählen andererseits lässt sich eine schmelzschweißtechnische Verbindung von Stahlschweißbolzen an Aluminiumkonstruktionen nicht durchführen. Einzige Möglichkeit der fügetechnischen Verarbeitung von Stahlbolzen in Leichtmetallkonstruktionen bietet das Reibschweißen. Das Reibschweißen erfordert jedoch sehr hohe Kräfte, die bei dünnen und sehr leicht verformbaren Baugruppen (z.B. Bleche) leicht zu unerwünschten Verformungen führen.

Aus DE 4 401 881 ist ein Schweißbolzen aus Aluminium bekannt geworden. Der Kopf ist als Zylinder ausgebildet, wobei das Verhältnis von Zylinderhöhe zu Zylinderdurchmesser in den Bereichen 1:2 bis 1:3 liegt. Mit einer derartigen Ausbildung des Schweißbolzenkopfes soll bei einfachem Aufbau eine verbesserte Haltewirkung erzielt werden. Ein Schweißbolzen aus einer Leichtmetalllegierung, die gleicher Art ist wie das Trägermaterial, ermöglicht die Anwendung aller bekannten Bolzenschweißtechniken.

Um den Festigkeitsnachteil von Leichtmetallen zu vermeiden, andererseits jedoch eine gute Anschweißmöglichkeit an Leichtmetallträgerbauteilen zu erhalten, ist aus der DE 2 911 121 U1 auch bekannt geworden, einen zusammengesetzten Schweißbolzen zu verwenden, bei dem der Spitzenteil aus einem anderen Werkstück als der übrige Bolzen besteht, d.h. vorzugsweise der Spitzenteil aus Aluminium und der mit einem Gewinde versehene Teil aus Stahl. Die Bolzenabschnitte werden in geeigneter Weise miteinander verbunden, damit sie die auftretenden Kräfte aufzunehmen in der Lage sind. Dies kann z.B. durch ein Reibschweißverfahren geschehen.

Der Erfindung liegt die Aufgabe zugrunde, ein Verfahren anzugeben, mit dem ein Bolzen aus Leichtmetall, einer Leichtmetalllegierung durch Reibschweißen auf Leichtmetallblechen so angebracht werden kann, dass seine Haltefestigkeit verbessert ist.

Die Aufgabe wird durch die Merkmale des Patentanspruchs 1 gelöst.

Beim erfindungsgemäßen Verfahren wird ein Leichtmetallbolzen, insbesondere aus Aluminium oder einer Aluminiumlegierung mit einem Leichtmetallwerkstück, z.B. einem Blech, das ebenfalls z.B. aus Aluminium oder einer Aluminiumlegierung bestehen kann, durch Reibschweißen fest verbunden. Zu diesem Zweck wird der Bolzen während des Erwärmungsvorgangs durch Reibung auf eine sehr hohe Drehzahl beschleunigt, in jedem Falle über 12000 U/min. Erfindungswesentlich ist ferner, dass bei diesem Vorgang mit Hilfe einer scharfen Kante oder einer sonstigen Ausbildung des anzuschweißenden Endes des Bolzens die Oxidschicht, die sich stets auf dem Leichtmetallwerkstück befindet, auch wenn es kurz zuvor gereinigt worden ist, mechanisch aufgerissen wird. Nach Erreichen der gewünschten Drehzahl wird auf den Bolzen ein impulsförmiger Stoß aufgebracht. Der Stoß hat eine relativ hohe Energie, findet jedoch nur in äußerst kurzer Zeit statt. Gleichzeitig oder kurz danach wird der Antrieb für den Bolzen abgeschaltet. Das Drehmoment des Antriebs nach dem Abschalten ist vorzugsweise relativ klein, d.h. der Rotor des Antriebswerkzeugs hat ein relativ kleines Trägheitsmoment.

Bei dem Bolzen nach der Erfindung aus Leichtmetall, insbesondere aus Aluminium, ist der Bolzenkopf mit einer Stirnfläche versehen derart, dass sie während des Reibschweißvorgangs die auf dem Blech vorhandene Oxidschicht mechanisch aufreißt.

Die Oberflächen von Leichtmetallen neigen zu rascher Oxidation. Auch wenn zur Vorbereitung des Schweißvorgangs die entsprechende Oberfläche gereinigt wird, kann bereits während des tatsächlichen Reibschweißvorgangs inzwischen wieder eine Oxidation eingetreten sein. Eine Oxidschicht auf dem Blech verursacht jedoch Bindefehler in der Fügeebene, wenn sie während des Reibschweißvorgangs nicht ausreichend entfernt werden kann. Bei der Erfindung hingegen ist der Bolzenkopf so geformt, dass er bei der Rotation in Anlage an dem Blech die Oxidschicht mechanisch aufreißt, sodass die Oxidschicht in der Folge mit dem plastifizierten Material des Bolzens nach außen zur Bildung des bekannten Wulstes bei der Reibschweißtechnik gefördert wird. Die Geometrie zur Ausbildung eines derart wirkenden Bolzenkopfes kann in weiten Grenzen beliebig sein, wobei hervorstehende Kanten oder Spitzen, welche den Aufbrecheffekt bewirken sollen, eine ausreichende Höhe aufweisen müssen, damit ein ungehindertes Fließen des Materials nach außen stattfinden kann.

In einer Ausgestaltung der Erfindung ist der Bolzenkopf mit fräserartigen Schneiden an der Stirnfläche ausgebildet. Im Prinzip ist jedoch jede Topographie, die geeignet ist, ein Aufbrechen der Oxidschicht zu bewerkstelligen und die auch auf einfache Weise herstellbar ist, für den erfindungsgemäßen Bolzen geeignet.

Nach einer weiteren Ausgestaltung der Erfindung ist der Bolzenkopf gegenüber dem restlichen Material des Bolzens verfestigt, z.B. durch eine Kaltverfestigung oder auch durch einen entsprechenden Härtevorgang, beispielsweise dem bei Leichtmetall üblichen Ausscheidungshärten. Die Härtung oder Verfestigung des Bolzenkopfes im Bereich der Stirnfläche erhöht die Standfestigkeit und verbessert damit das mechanische Aufbrechen der Oxidschicht beträchtlich. Das Verfestigen kann mit Hilfe eines separaten Bearbeitungs- bzw. Fertigungsschrittes erfolgen. Es ist jedoch denkbar, eine Kaltverfestigung bei der Formgebung des Bolzenkopfes durch entsprechendes Stauchen oder dergleichen zu erzielen.

Ein Ausführungsbeispiel der Erfindung sei nachfolgend anhand von Zeichnungen näher erläutert.

Fig. 1 zeigt in Seitenansicht einen Schweißbolzen nach der Erfindung.

Fig. 2 zeigt die Stirnfläche des Schweißbolzens nach Fig. 1.

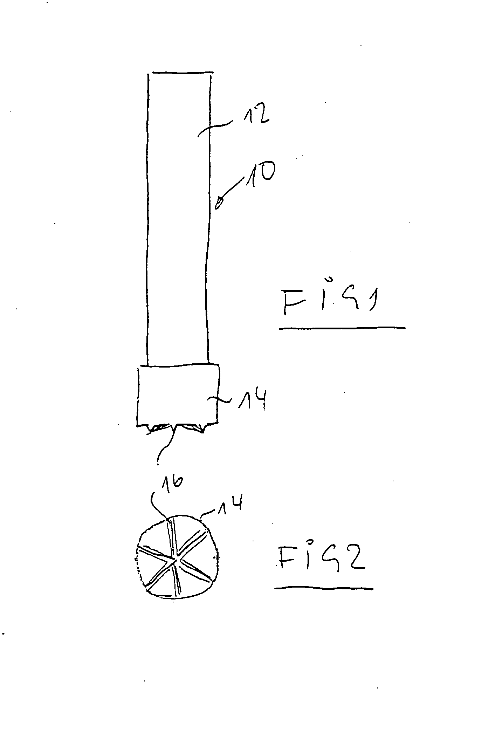

In Fig. 1 ist ein Schweißbolzen 10 zu erkennen, der aus einem Schaft 12 und einem Kopf 14 mit einem gegenüber dem Schaft 12 größeren Durchmesser. Der Bolzen 10 ist einteilig geformt, er kann auch zweiteilig sein aus Aluminium und Stahl und der Schaft 12 kann z.B. mit einem Außengewinde versehen sein.

Wie aus Figuren 1 und 2 erkennbar, ist die Stirnseite des Bolzenkopfes 14 nicht plan, sondern mit sternartig angeordneten Schneiden 16 versehen. Die Schneiden 16 werden bei der Formung des Bolzen mit geformt oder nachträglich durch ein geeignetes Kaltformverfahren hergestellt. Die Schneiden bzw. der Bolzenkopf 14 im Bereich der Schneiden sind/ist vorzugsweise durch ein geeignetes Verfahren verfestigt, beispielsweise durch das Kaltverformen zur Herstellung der Schneiden 16 oder durch ein Ausscheidungshärten.

Beim Reibschweißen wird der Bolzenkopf 14 mit den Schneiden 16 gegen ein Blech aus Leichtmetall gehalten, beispielsweise aus Aluminium. Der Bolzen 10 wird mit Hilfe eines geeigneten Antriebswerkzeugs ausreichend schnell rotieren gelassen mit mehr als 12000 U/min., vorzugsweise 18000 U/min. oder mehr und gleichzeitig gegen das Blech angepresst, sodass die erwünschte Plastifizierung des Materials von Bolzen und Träger (Blech) eintritt, wonach das weiche Material nach außen fließen kann. Eine auf dem Blech zuvor vorhandene Oxidschicht wird mit Hilfe der Schneiden 16 mechanisch aufgebrochen und aufgerissen und in der Folge mit dem plastifizierten Material in den Reibschweißwulst gefördert, wodurch die Oxidschicht nicht in dem Maße in der Fügezone verbleibt, wie es bei herkömmlichen Schweißbolzen der Fall ist.

Nach Erreichen der gewünschten Drehzahl wird auf den Bolzen ein impulsartiger Stoß aufgebracht und zugleich der Antrieb abgeschaltet. Der drehende Teil des Antriebs hat ein kleines Trägheitsmoment, wodurch das Drehmoment am Bolzen nach dem Abschalten relativ klein ist. Der Stoß kann durch einen impulsförmigen pneumatischen Druckstoß erzeugt werden oder durch Mittel, die eine Explosion auslösen oder dergleichen.

Es versteht sich, dass jede beliebige Geometrie der Stirnfläche des Bolzenkopfes 14, welche eine mechanische Einwirkung auf die Oxidschicht auf dem Leichtmetallblech hat, für das Reibschweißen eines Aluminium- oder Leichtmetallbolzens auf einem Leichtmetallblech geeignet ist.

Es versteht sich ferner, dass eine besondere Ausbildung eines Bolzenkopfes, wie er in Fig. 1 gezeigt ist, nicht erforderlich ist. Der Bolzen kann auch über seine gesamte Länge als Zylinderbolzen hergestellt sein.

## Patentansprüche

1. Verfahren zur Herstellung einer Reibschweißverbindung eines Schweißbolzens mit einem Werkstück aus Leichtmetall, insbesondere Aluminium, **gekennzeichnet durch** folgende Schritte:
- ein Bolzen aus Leichtmetall, insbesondere Aluminium, wird mit Hilfe eines Antriebswerkzeugs auf eine Drehzahl von mehr als 12000 U/min. beschleunigt und gleichzeitig gegen das Werkstück angepresst
- mit Hilfe einer scharfe Kanten oder dergleichen aufweisenden Geometrie der Stirnfläche des Bolzenkopfes wird die Oxidschicht auf dem Werkstück mechanisch zerstört bzw. aufgerissen
- nach Erreichen der gewünschten Drehzahl wird auf den Bolzen ein impulsförmiger Stoß aufgebracht und
- zugleich wird mit dem impulsförmigen Stoß oder unmittelbar danach das Antriebswerkzeug abgeschaltet.

2. Verfahren nach Anspruch 1, **dadurch gekennzeichnet, dass** das auf den Bolzen aufgebrachte Drehmoment nach dem Abschalten des Antriebswerkzeugs klein ist.

3. Verfahren nach Anspruch 1 oder 2, **dadurch gekennzeichnet, dass** die Drehzahl 18000 U/min. oder höher ist.

4. Bolzen aus Leichtmetall oder einer Leichtmetalllegierung zum Reibschweißen auf Leichtmetallblechen zur Durchführung des Verfahrens nach einem der Ansprüche 1 bis 3, mit einer Stirnfläche des Bolzenkopfes dergestalt, dass sie während des Reibschweißvorgangs eine auf dem Blech befindliche Oxidschicht mechanisch aufreißt.

5. Bolzen nach Anspruch 4, **dadurch gekennzeichnet, dass** die Stirnfläche mit erhabenen Spitzen und/oder mindestens einer erhabenen Kante geformt ist.

6. Bolzen nach Anspruch 5, **gekennzeichnet durch** eine mit fräserartigen Schneiden (6) ausgebildete Stirnfläche.

7. Bolzen nach einem der Ansprüche 4 bis 6, **dadurch gekennzeichnet, dass** der Bolzenkopf (14) gegenüber dem restlichen Material (12) des Bolzens (10) verfestigt ist.

8. Bolzen nach Anspruch 7, **dadurch gekennzeichnet, dass** der Bolzenkopf (14) durch Kaltverformung verfestigt ist.

9. Bolzen nach Anspruch 7, **dadurch gekennzeichnet, dass** der Bolzenkopf gehärtet ist.

10. Bolzen nach Anspruch 96, **dadurch gekennzeichnet, dass** der Bolzenkopf durch Ausscheidungshärten gehärtet ist.

11. Bolzen nach einem der Ansprüche 4 bis 10, **dadurch gekennzeichnet, dass** die Kanten oder Vorsprünge des Bolzenkopfes so erhaben geformt sind, dass plastifiziertes Material während des Schweißvorgangs ungehindert zur Seite hin abfließen kann.
